# EUROPEAN PATENT APPLICATION

(11) **EP 4 000 373 A1**
(43) Date of publication of application: **25.05.2022**
(21) Application number: 20209227.6
(22) Date of filing: 23.11.2020
(51) Int. Cl.: A01D 41/12

(54) **RESIDUE SPREADER FOR A COMBINE HARVESTER**

(71) Applicant: AGCO International GmbH, 8212 Neuhausen am Rheinfall (CH)
(72) Inventor: BOJSEN, Thomas, 8930 Randers (DK)
(74) Representative: AGCO Intellectual Property Department

(57) **Abstract**

A residue spreader (35) for receiving crop residue from a residue chopper (35) of a combine harvester (10) and for spreading crop residue onto the ground (101). The spreader (35) comprises a body (70) having an inlet side (304) and an outlet side (306). Left and right groups of deflectors (72) are provided on the underside of the body (70), each deflector (72) being pivotally mounted on said body (70) in juxtaposed position and configured to laterally deflect the crop residue between the inlet side (304) and the outlet side (306). The deflectors (72) within each group are connected together by a respective connection element (80). A distribution actuator (82) is connected to the connection element (80) of both the left and right groups of deflectors, wherein the distribution actuator (82) is operable to control movement of both the left and right groups of deflectors in common. The distribution actuator (82) is connected to each connection element (80) by first and second links (84,85). A linear adjustment actuator (90) is connected so as to triangulate between the second link (76) and the connection element (80) for each group of deflectors (72L,72R).

## Description

### Field of Invention

The present invention relates to agricultural harvesters such as combines, and, more particularly, to a tailboard associated with a cutting machine for spreading over the ground chopped material received from the cutting machine.

### Background of invention

For many decades, self-propelled combine harvesters have been used by farmers to harvest a wide range of crops including cereals, maize and oil-seed rape. Typically, a combine harvester cuts the crop material, threshes the grain (or seed) therefrom, separates the grain from the crop residue, and cleans the grain before storing in an on-board tank. The crop residue, often referred as MOG (Material Other than Grain), is ejected from the rear of the machine. Depending upon the crop being harvested, the crop residue is usually predominantly straw and referenced as such hereinafter. However, it should be appreciated that references to straw used herein will include any residue crop material discharged by the processor of a combine harvester.

Depending on the requirements of the farmer, the straw is either deposited directly onto the ground in windrows for subsequent baling and removal, or chopped and spread onto the field behind the combine for incorporation back into the soil. Straw choppers are typically fitted at the rear of the combine for chopping the straw ejected from the separating apparatus. The straw choppers are often mounted in a way to allow them to pivot away from path of the discharged straw when not required. Straw spreaders are often provided behind the chopper to receive the chopped straw from the chopper and spread the chopped straw onto the ground.

Several different types of straw spreaders are known. In their simplest form a 'passive' tailboard located immediately behind the straw chopper and provided with directional guide vanes relies upon the momentum of the chopped residue propelled from the straw chopper to spread the material over a spread width. US 6,939,221 discloses an example of a tailboard with deflectors. In another example WO-03/039238 discloses a spreader having adjustable spreader wings.

It is also known to provide 'active' straw spreaders which have rotating impellors, usually two, the impellors imparting a propulsive force to the chopped material to achieve a greater spread width than can normally be achieved with passive spreaders. US-7,331,855 discloses an example of a straw spreader with two counterrotating impellors.

In addition to achieving a satisfactory spread width, it is also desirable to spread the crop residue evenly across the ground to achieve an even distribution of nutrients provided by the residue, to avoid issues with subsequent tillage operations and to promote even establishment of the next crop. Variables such as the field's terrain, cutting height and wind direction can affect the final placement of the crop residue and, thus, the evenness of distribution.

Current methods to adjust the spread width and pattern include the adjustment of individual deflector plates, changing the angle of the tailboard and/or adjusting the speed of impellors. For example, WO-03/039238 discloses directional vanes, the angle of which is adjusted by an actuator. Furthermore, WO-03/03928 discloses a spreader with spreader wings divided into a left-hand group and a right-hand group, wherein the wings of each group are connected together by a connection element. The two connections elements are interconnected by a transmission member which allows for manual adjustment of the positional relationship between the wings of the two groups.

### Summary of Invention

According to one aspect of the present invention, there is provided a residue spreader for receiving crop residue from a residue chopper of a combine harvester and for spreading crop residue onto the ground. The spreader comprises a body having an inlet side and an outlet side. Left and right groups of deflectors are provided, each deflector being pivotally mounted on said body in juxtaposed position and configured to laterally deflect the crop residue between the inlet side and the outlet side. The deflectors within each group are connected together by a connection element. A distribution actuator is connected to the connection element of both the left and right groups of deflectors, wherein the distribution actuator is operable to control movement of both the left and right groups of deflectors in common. The distribution actuator is connected to each connection element by first and second links, wherein the first link is pivotally connected at one end to the distribution actuator and at a second end to a first end of the second link. The second link is pivotally connected at a second end to the connection element. A linear adjustment actuator is connected so as to triangulate between the second link and the connection element.

In a preferred arrangement the adjustment actuators are connected within the respective drive linkages between the distribution actuator and the respective connection elements. Advantageously the adjustment actuators can be controlled so as to adjust the positional relationship between the two groups of deflectors, thereby allowing for the adjustment of spread width and lateral offset. These adjustments can be made independent of the distribution actuator which may, in a preferred mode of operation, serve to periodically oscillate the deflectors from side to side so as to deliver a more even spread pattern.

The deflector plates are divided into at least two groups in order to make it possible to adjust the deflector plates independently with regards to the required width and spreading pattern and side wind compensation.

The deflector plates are preferably made from plastic, or sheet metal or the like.

The actuator may be a hydraulic or pneumatic cylinder or an electromechanical servo unit or any other suitable actuator readily known by or available to a skilled person. In a preferred embodiment, the actuator is a dual rod cylinder.

Each deflector preferably extends rearwards from a respective pivot axis.

In one embodiment each deflector is mounted on the underside of said body, wherein each deflector has a respective crank arm which is mounted above the body for pivoting movement around the pivot axis with the associated deflector. The provision of a crank arm above the body allows for control of movement of the deflectors with linkage located away from the flow of residue material. Each crank arm is thus preferably pivotally connected to the connection element of the associated group above the body.

The body is preferably generally planar and may take the form of a tailboard.

Whilst the invention lends itself well to a passive residue spreader, impellors may be provided to achieve wider spreads for applications with wider headers for example. In one embodiment a pair of impellors are journaled to the body on respective upright rotation axes and positioned outboard of the inlet deflectors. In this case, the impellors engage residue material that is incident on the outboard portions of the inlet side. Outermost ones of the deflectors may be configured to channel or deflect residue material accelerated by the impellors.

Aspects of the invention may be embodied in a residue spreading system which includes a controller configured to control pivoting movement of the deflectors. The controller may be an electronic controller with programmable logic for example. In one embodiment movement of the deflectors is controlled in dependence upon a sensed feeding state in association with the crop stream entering or exiting a chopper upstream of the spreader.

### Brief Description of the Drawings

The invention will now be described, by way of example only, with reference to the accompanying drawings, in which:
Figure 1 shows a schematic side view of a known combine harvester comprising a residue spreader positioned after or downstream of a straw chopper;
Figure 2 shows an enlarged schematic side view of a residue handling system located at the rear of a combine harvester in accordance with an embodiment;
Figure 3 is a schematic plan view of the residue handling system of Fig. 2, cutaway to reveal the working components;
Figure 4 is a schematic plan view of a residue spreader in accordance with an embodiment showing the control actuators and linkages in association with the deflectors; and,
Figure 5 is a block diagram of a residue spreading system in accordance with an embodiment.

### Detailed Description

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

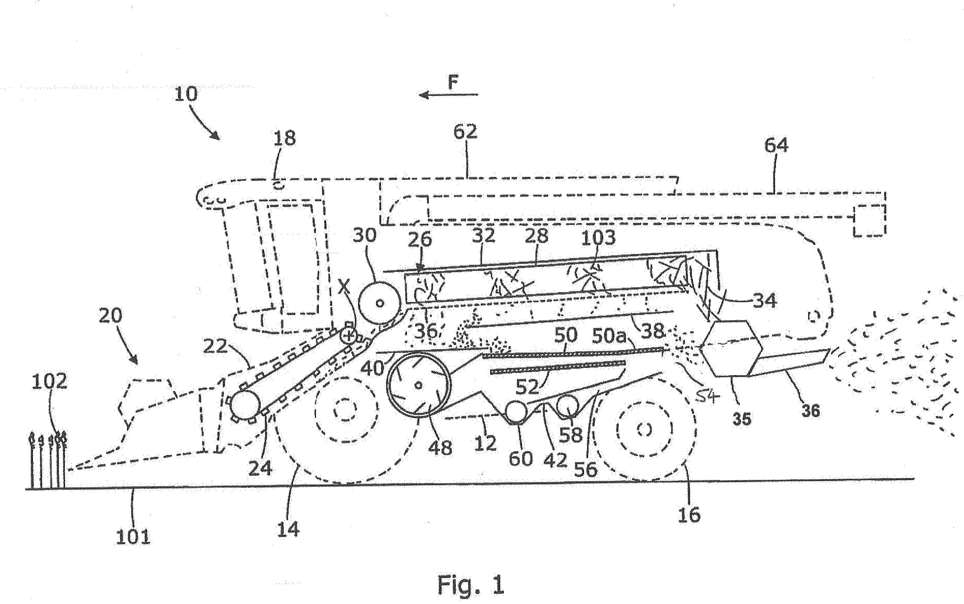

Relative terms such as forward, rearward, transverse, lateral, longitudinal and sideways will be made with reference to the normal forward direction of travel of the combine 10 and indicated by arrow F represented in Figure 1. The terms vertical and horizontal will be made with reference to the level ground 101 upon which the combine 10 is disposed. In other words the Cartesian axes of 'longitudinal', 'transverse', and 'vertical' are made in relation to the frame 12 of combine 10 and are not affected by any slope in the ground. The terms "upstream" and "downstream" are made with reference of the general direction of crop flow along the material conveyance systems described.

Figure 1 illustrates in schematic form the main components of the crop processing system of a combine harvester 10 and will be used to explain the flow of material below. The crop processing system is shown in solid lines whilst the outline profile of harvester 10 is shown in ghost form.

Combine harvester 10, hereinafter referred to as 'combine', includes a frame 12 supported on front wheels 14 and rear steerable wheels 16 which engage the ground 101. A driver's cab 18 is also supported on the frame 12 and houses a driver's station from where a driver controls the combine 10.

A cutting header 20 is detachably supported on the front of a feeder house 22 which is pivotable about a transverse axis x to lift and lower the header 20 in a conventional manner.

The combine 10 is driven in a forward direction (arrow F) across a field of standing crop 102 in a known manner. The header 20 serves to cut and gather the standing crop material before conveying such as a crop material stream into feeder house 22. An elevator 24, normally in the form of a chain and slat conveyor or elevator as shown, is housed within the feeder house 22 and serves to convey the crop material stream upwardly and rearwardly from the header 20 to the crop processor designated generally at 26. At this stage the crop material stream is unprocessed.

The crop processor 26 of the illustrated combine 10 includes a pair of axial flow threshing and separating rotors 28 fed by a tangential flow, crop material impelling, feed beater 30. It should be appreciated however that alternative types of crop processor may be used without deviating from the scope of the invention. For example, the crop processor may instead include a conventional tangential flow threshing cylinder with a plurality of straw walkers for separation. Alternatively, a single axial-flow processing rotor may be employed.

Turning back to Figure 1, the feed beater 30 rotates on a transverse axis and comprises crop engaging deflectors (not shown) which convey the crop material stream under the beater and into rotor housings 32 which each house one of said rotors 28. It should be appreciated that only the left-hand rotor 28 and housing 32 is shown in Figure 1 whereas the right-hand equivalent is hidden from view.

The rotors 28 are positioned to have a generally longitudinal, or fore and aft, rotation axis which is normally inclined upwardly towards the rear of the combine 10.

Flighting elements (not shown) provided on the front end of each rotor 28 engage the crop material stream which is then conveyed as a ribbon or mat 103 in a generally rearward axial and helical path in the space between the rotor 28 and the rotor housing 32.

The axial flow rotors 28 serve to thresh the crop stream in a front region, separate the grain therefrom in a rear region, and eject the straw residue via a straw discharge chute 34 provided below a rear portion of the rotors 28, the straw falling either directly onto the ground in a windrow, or via a straw chopper 35 and straw spreader 36 to be described in more detail later.

A part-cylindrical grate 36 provided in the underside of each rotor housing 32 allows the separated material to fall by gravity onto either a return pan 38 located below a rear section of the processor 26, or directly onto a stratification pan 40 located below a front section of the processor 26. In reality the separated material falling through the grate 36 is typically a mix of grain and material other than grain (MOG) which may include chaff, tailings and some straw.

The return pan 38 and stratification pan 40 together serve as a material conveyance system arranged to convey the separated crop material to a grain cleaning shoe designated generally at 42. The pans 38,40 each include a respective linkage (not shown) to convert a torque source into oscillating motion to oscillate the pans in a generally fore and aft direction. Combined with a transversely rippled or corrugated floor, the oscillating movement of the return pan 38 and stratification pan 40 propels the material generally forwardly or rearwardly respectively.

The return pan 38 "returns" the separated material incident thereon towards the front of the combine 10 (in the direction F) to a front discharge edge 44 from where the material falls or cascades onto the stratification pan 40. The material on the stratification pan 40 is conveyed rearwardly to a rear discharge edge 46 from where the material falls into the cleaning system or "shoe" 42.

The grain-MOG mix falls from the rear discharge edge 46 into the cleaning shoe 42 where the cascading mix is subjected to a cleaning airstream generated by fan 48, before falling onto the front of upper sieve or chaffer 50.

Chaffer 50 comprises adjustable louvres supported on a frame which is driven in fore-and-aft oscillating manner. The material which settles on the chaffer 50 is conveyed in a generally rearward direction and the heavier smaller grain-rich material passes between the louvres onto an underlying lower sieve 52, whereas the lighter larger material (mostly chaff) passes to the end of the chaffer and out of the rear of the machine at shoe outlet 54. A rear section of chaffer 50a is commonly independently adjustable and is configurable to allow tailings to pass there through into a re-threshing region 56 from where the tailings are conveyed via a re-threshing auger 58 back to the processor 26.

Lower sieve 52 is also driven in an oscillating manner to convey the collected grain-MOG mix rearwardly wherein the material falling there through is collected by a clean grain auger 60 for conveyance to an elevator (not shown) for onward conveyance to a grain tank 62. Material which does not pass through lower sieve 52 and is instead conveyed off the rear edge thereof falls into re-threshing region 56 for subsequent re-threshing.

The airstream generated by fan unit 48 is also conveyed by ducting up through lower sieve 52 and chaffer 50 to encourage lifting of the MOG from the chaffer surface.

For completeness the combine 10 includes an unloading system which includes an unloading auger 64.

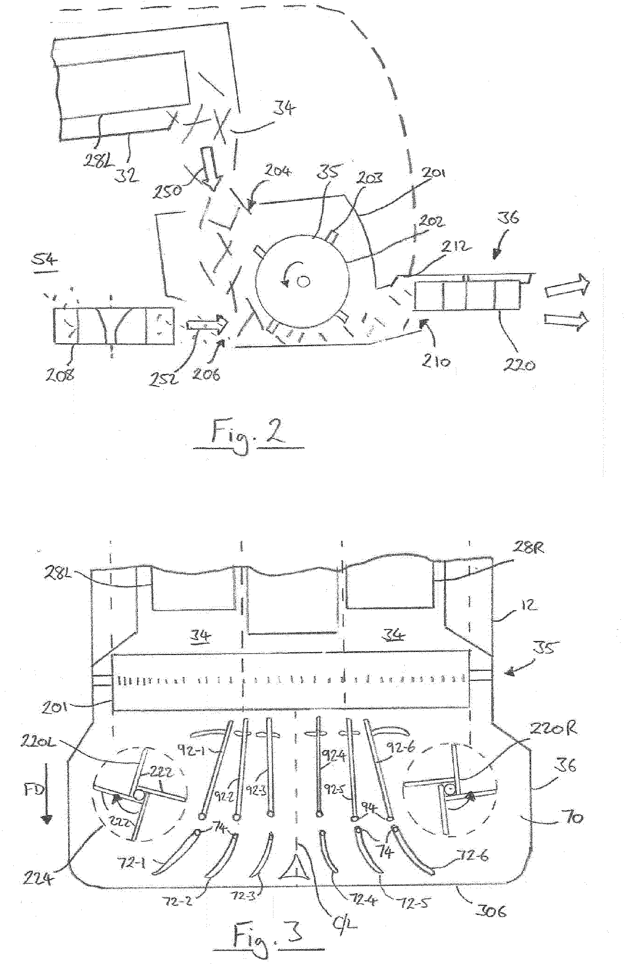

Aspects of the invention relate to the handling of the crop residue ejected by the straw chopper 35 and in particular to the straw spreader 36. Fig. 2 shows the passage of straw dropped by the processing rotors 28 and of the chaff from the shoe outlet 54.

The straw chopper 35 has a housing 201 inside which a chopper drum 202 is journaled for rotation on a transverse axis. The chopper drum 202 has sets of knives 203 pivotally mounted to the circumferential surface, the knives 203 interacting with stationary knives (not shown) to chop the material. An upper part of the housing 201 is formed with a first inlet 204 for reception of threshed crop residue (usually and mostly straw) falling from the rear of crop processing rotors 28L, 28R, indicated by arrow 250. Whilst it should be appreciated that only the left-hand rotor 28L can be seen in Fig. 2, both rotors 28L, 28R can be viewed from above in Fig. 3.

A front region of the housing 201 is optionally provided with a second inlet 206 for reception of chaff either directly from the shoe outlet 54 or via a chaff spreader 208 as is known in the art, for example as disclosed in US-6,908,379. The movement of chaff from chaff spreader 208 through the second inlet 206 is indicated by arrow 252.

The residue entering the housing 201 is conveyed tangentially around and under the chopper drum 202, is chopped by the knives 203, and is expelled through an elongate transverse outlet 210 provided in a rear lower region of the housing 201.

A straw spreader 36 is pivotally mounted on the rear part of the combine 10 by being connected proximate to the chopper outlet 210 at a pivot mount 212. The spreader 36 serves to spread the chopped material discharged from the chopper 35 via the outlet 210 on to the ground 101.

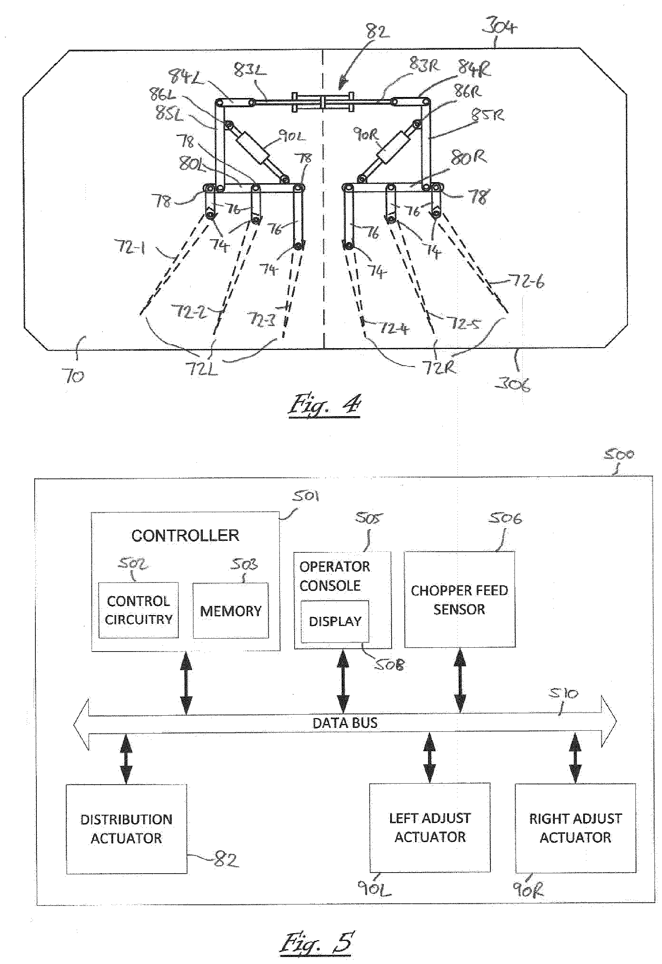

With reference to Figs. 3 and 4, the straw spreader or tailboard 36 comprises a generally planar body in the form of a base plate 70. The base plate 70 has an inlet side 304 and an outlet side 306. The inlet side 304 extends transversely along a front edge of the tailboard 36 contiguous or adjacent an upper edge of the chopper outlet 210. The outlet side 306 extends transversely along a rear edge of the tailboard 36. Chopped crop residue exiting through the chopper outlet 210 is thrown up against the underside of the base plate 70 and directed in a generally rearward direction of flow (indicated by arrow FD) from the inlet side 304 to the outlet side 306.

The spreader 36 of Fig. 3 comprises two sets of deflectors in the form of deflector plates mounted on the underside of the base plate 70 and shaped and arranged so that chopped material exiting from the outlet 210 impacts the deflector plates causing a lateral change in direction of the material.

Firstly, a set of six outlet (or output) deflectors 72 (labelled as 72-1 to 72-6), are provided, each outlet deflector 72 being pivotally mounted on the underside of the base plate 70 in juxtaposed position and configured to laterally deflect the crop residue between the inlet side 304 and the outlet side 306. The outlet deflectors 72 are pivotally connected to the base plate 70 at respective pivoting connections 74 in a juxtaposed relationship. Each outlet deflector 72 extends generally rearwards, or in the direction of crop conveyance, from the respective pivot axis 74 towards the outlet side 306.

Each outlet deflector 72 extends generally perpendicularly to the plane of the base plate 70 with a curved (Fig. 3) or straight (Fig. 4) cross-sectional profile within that plane. Each outlet deflector 72 protrudes generally downwards to present a deflecting surface which engages the residue material passing along the underside of the base plate 70. As shown in Fig. 3, the curved profile of the output deflector plates 72 changes to the left and right of the set such as to divert the cut material away from the centreline of the spreader (represented by C/L) which aligns with the centreline of the combine harvester 10.

The outlet deflectors 72 are preferably made from plastic, or sheet metal or the like.

The six outlet deflectors 72 are divided into a left-hand group 72L of three outlet deflectors 72-1, 72-2, 72-3, and a right-hand group 72R of three outlet deflectors 72-4, 72-5, 72-6. The deflectors 72 within each group of outlet deflectors 72L, 72R are coupled together so that they move in unison.

Although illustrated and described as having six outlet deflectors 72 in two groups of three deflectors, it should be appreciated that more or less than six deflectors can be provided.

Secondly, with reference again to Fig. 3, an optional set of six inlet (or input) deflectors 92 (labelled in Figs. 3 and 4 as 92-1 to 92-6), are provided, each inlet deflector 92 being pivotally mounted on the underside of the base plate 70 in juxtaposed position and configured to laterally deflect the crop residue between the inlet side 304 and the outlet deflectors 72. The inlet deflectors 92 are pivotally connected to the base plate 70 at respective pivoting connections 94 in a juxtaposed relationship. Each inlet deflector 92 extends generally forwards, or counter to the direction of crop conveyance, from the respective pivot axis 94 towards the inlet side 304.

Each inlet deflector 92 extends generally perpendicularly to the plane of the base plate 70 with a preferably straight cross-sectional profile within that plane. Each outlet deflector 92 protrudes generally downwards to present a deflecting surface which engages the residue material passing along the underside of the base plate 70.

The inlet deflectors 92 are preferably made from plastic, or sheet metal or the like.

The six inlet deflectors 92 are optionally divided into a left-hand group of three inlet deflectors 92-1, 92-2, 92-3, and a right-hand group of three inlet deflectors 92-4, 92-5, 92-6. The deflectors 92 within each group of inlet deflectors are coupled together so that they move in unison.

Each group of inlet deflectors 92L, 92R may have coupled thereto an actuator (not shown) which is mounted to the upper side of the base plate 70 and connected to one of the inlet deflectors 92 in the group through a preferably arcuate slot provided in the base plate 70. Left and right pivoting of the groups of deflectors 92L, 92R can then be controlled by the actuators.

With reference to Figs. 2 and 3, the straw spreader 36 may optionally include impellors 220 journaled to the underside of the base plate 70. In the preferred arrangement shown, two impellors 220L, 220R are each journaled to the underside of the base plate 70 on respective upright rotation axes and positioned outboard of the inlet deflectors 92. The impellors 220 each comprise a plurality of impellor blades 222 which rotate to define a cylindrical swept envelope 224.

The impellors 220 are operable to engage residue material ejected from the outboard regions of chopper outlet 210 and incident upon the outboard regions of inlet side 304. The engaged material is propelled generally rearwardly by the impellors 220 and is steered of guided laterally by the outermost inlet deflectors 91-1, 92-6, and the outermost outlet deflectors 72-1, 72-6.

In an alternative embodiment the actuators 482 are omitted and the inlet deflectors 92 are adjusted manually and held in position by appropriate fastening means such as threaded bolts that pass through arcuate slots in the base plate 70, and nuts that grip the base plate 70. Even with manual adjustment, the inlet deflectors 92 may be coupled together with link arms in one or more groups to assist the manual adjustment. In an alternative embodiment the inlet deflectors 92 are fixedly mounted to the base plate 70 with no freedom to pivot. In other embodiments, such as that shown in Fig. 4, the inlet deflectors are omitted completely.

Turning to Fig. 4, a residue spreader in accordance with an embodiment is shown, wherein only outlet deflectors 72 are included, shown as having a straight profile and mounted under the body 70. Attached to each of the outlet (or output) deflectors 72 at its pivoting connection 74 is a respective crank arm 76 extending generally in the opposite direction to the respective deflector 72. The pivoting connections 74 may include a vertical pin passing through the body 70 and retained in position with suitable bearings and fastenings. The deflectors 72 and crank arms 76 pivot together and so, in one embodiment, may be keyed to the respective pin passing through the pivoting connection 74 so as to rotate therewith.

The crank arms 76 and linkage described hereinafter are conveniently mounted above the body 70 so as to keep it separate from the flow of residue material.

The distal (free) end of each crank arm 76 in each group is connected to a connection element 80 or crossbar at respective pivotal connections 78. The connection elements 80 serve to couple together the deflectors 72 within the associated group so that they move together in unison. Moving one of these connection elements 80 to the left or right causes the connected deflectors 72 to swing to the right or left about the respective pivoting connection 74.

Although shown as a common component, the connection element 80 may comprise a plurality of link arms each connecting two or more deflectors 72 together to effect coupled movement.

Movement of the crank arms 76 to swing the outlet deflectors 72 may be achieved by a distribution actuator 82, which is shown in Fig. 4 as a double-ended hydraulic cylinder. A first piston rod 83L of the distribution actuator 82 is connected to the connection element 80L of the left-hand group of deflectors 72L by a first link arm 84L and a second link arm 85L. A second piston rod 83R of the distribution actuator 82 is connected to the connection element 80R of the right-hand group of deflectors 72R by a first link arm 84R and a second link arm 85R. In both cases, the first link 84 is pivotally connected at one end to the distribution actuator 82 and at a second end to a first end of the second link 85. The second link 85 is pivotally connected at a second end to the respective connection element 80 at a position away from any of the pivotal connections 78.

For both the linkage mechanisms of both sides, the second link 85 is triangulated with the connection element 80 by a linear adjustment actuator 90. In more detail, a first end of left-hand adjustment actuator 90L is connected to the left-hand second link 85L at a pivot connection 86L intermediate the pivotal connections with the left-hand first link 84L and the left-hand connection element 80L. A second end of the left-hand adjustment actuator 90L is connected to the left-hand connection element 80L. A first end of right-hand adjustment actuator 90R is connected to the right-hand second link 85R at a pivot connection 86R intermediate the pivotal connections with the right-hand first link 84R and the right-hand connection element 80R. A second end of the right-hand adjustment actuator 90R is connected to the right-hand connection element 80R.

Extension and retraction of the adjustment actuators 90L,90R changes the angle between the associated second link 85 and the connection element 80 thereby adjusting the position of the deflectors of that group only.

Although shown as a double-ended hydraulic cylinder, it should be understood that any practical actuator that can move first links 83 to the left and right can be used, such as an orbital motor or wobble box with a crank connected to the first links 84.

With reference to Fig. 5, a residue spreading system 500 comprises an electronic control unit (hereinafter termed 'ECU') 501 which is in communication (via a data bus 510 for example) with an operator console 505, a chopper feed sensor 506, and the control actuators 82, 90. The ECU 501 comprise control circuitry 502 which may be embodied as custom made or commercially available processor, a central processing unit or an auxiliary processor among several processors, a semi-conductor based micro-processor (in the form of a micro-chip), a macro processor, one or more applications specific integrated circuits, a plurality of suitably configured digital logic gates, and/or other well-known electrical configurations comprising discrete elements both individually and in various combinations to coordinate the overall operation of the combine 10.

The ECU 501 further comprises memory 503. The memory 503 may include any one of a combination of volatile memory elements and non-volatile memory elements. The memory 503 may store a native operating system, one or more native applications, emulation systems, emulated applications for any of a variety of operating systems and/or emulated hardware platforms, emulated operating systems etc. The memory 503 may be separate from the controller 501 or may be omitted.

The operator console 505 comprises a display 508 which may be integrated as part of a terminal having user interface devices such as buttons, levers and switches. The console 505 is mounted proximate to a drivers work station in cab 18.

The chopper feed sensor 506 may be located upstream of the chopper 35, for example in the vicinity of the straw discharge chute 34, and configured to generate electrical signals that are representative of the feeding state of the chopper 35. For example, the feed sensor 506 may indicate wide, narrow or offset feeding of the residue material to the chopper 35.

In one embodiment the ECU 501 is configured to control movement of the deflectors 72 in dependence upon signals received from the feed sensor 506 or other sensed parameter that is indicative of the feeding state of the residue upstream of the chopper 35 or the spreader 36.

During operation the distribution actuator 82 is operable to control movement of both the left and right groups of deflectors in common. In one mode of operation the distribution actuator 82 may be controlled to oscillate left and right causing all deflectors to repeatedly swing left and right in order to deliver an even spread distribution across the spread width. In addition, the adjustment actuators 90L, 90R can be adjusted to increasing, decreasing or offsetting the spread width.

For example, if both adjustment actuators 90L, 90R are extended, the spread width will become wider. If both adjustment actuators 90L, 90R are retracted, the spread width will become narrower. If left-hand adjustment actuator 90L is extended and right-hand actuator 90R is retracted, the spread will be offset to the left. If right-hand adjustment actuator 90R is extended and left-hand actuator 90L is retracted, the spread will be offset to the right.

In summary there is disclosed a residue spreader for receiving crop residue from a residue chopper of a combine harvester and for spreading crop residue onto the ground. The spreader comprises a body having an inlet side and an outlet side. Left and right groups of deflectors are provided on the underside of the body, each deflector being pivotally mounted on said body in juxtaposed position and configured to laterally deflect the crop residue between the inlet side and the outlet side. The deflectors within each group are connected together by a respective connection element. A distribution actuator is connected to the connection element of both the left and right groups of deflectors, wherein the distribution actuator is operable to control movement of both the left and right groups of deflectors in common. The distribution actuator is connected to each connection element by first and second links. A linear adjustment actuator is connected so as to triangulate between the second link and the connection element for each group of deflectors.

Clearly the skilled person will recognise that various aspects, embodiments and elements of the present application, including as illustrated in the figures, may be arranged in differing combinations, any and all of which may be considered to fall within the ambit of the inventive concept. The invention will be defined by the following claims.

## Claims

1. A residue spreader (36) for receiving crop residue from a residue chopper (36) of a combine harvester (10) and for spreading crop residue onto the ground (101), the spreader (36) comprising:
- a body (70) having an inlet side (304) and an outlet side (306);
- left and right groups of deflectors (72), each deflector (72) being pivotally mounted on said body (70) in juxtaposed position and configured to laterally deflect the crop residue between the inlet side (304) and the outlet side (306), wherein the deflectors (72) within each group are connected together by a connection element;
- a distribution actuator connected to the connection element of both the left and right groups of deflectors, wherein the distribution actuator is operable to control movement of both the left and right groups of deflectors in common;
**characterised in that** the distribution actuator (82) is connected to each connection element (80) by first and second links (84,85), wherein the first link (84) is pivotally connected at one end to the distribution actuator (82) and at a second end to a first end of the second link (85), and wherein the second link (85) is pivotally connected at a second end to the connection element (80);
and **in that** a linear adjustment actuator (90) is connected so as to triangulate between the second link (76) and the connection element (80).

2. A residue spreader (36) according to claim 1, wherein each of the left and right groups (72L,72R) of deflector plates (72) comprises at least three deflector plates.

3. A residue spreader (36) according to claim 1 or claim 2, wherein the distribution actuator is a hydraulic or pneumatic cylinder or an electromechanical servo unit.

4. A residue spreader (36) according to claim 1 or claim 2, wherein the distribution actuator is a double-ended hydraulic cylinder with a first end connected to the left hand group (72L) of deflectors and a second end connected to the right-hand group (72R) of deflectors.

5. A residue spreader (36) according to claim 1 or 2, wherein the distribution actuator comprises an orbital motor or wobble box with a crank connected to the first link (84).

6. A residue spreader (36) according to any preceding claim, wherein the distribution actuator operates to move the first link (76) transversely to the body (70).

7. A residue spreader (36) according to any preceding claim, wherein each linear adjustment actuator (90) is an electric actuator.

8. A residue spreader (36) according to any preceding claim, wherein each deflector (72) extends rearwards from a respective pivot axis (74).

9. A residue spreader (36) according to claim 8, wherein each deflector (72) is mounted on the underside of said body (70), wherein each deflector (72) has a respective crank arm (76) which is mounted above the body (70) for pivoting movement around the pivot axis (74) with the associated deflector (72), and wherein each crank arm (76) is pivotally connected to the connection element (80) of the associated group.

10. A residue spreader according to any preceding claim, wherein the body (70) is generally planar and each of the deflectors (72) extends substantially vertically downwards and has a generally curved profile in a plane parallel to the body.

11. A residue spreader (36) according to any preceding claim, further comprising a plurality of inlet deflectors (92), each inlet deflector being pivotally mounted on said body (70) in juxtaposed position and extending forwards from a respective pivot axis (94) towards said inlet side (304) and each being configured to laterally deflect the crop residue between the inlet side (304) and the outlet side (306) upstream of the outlet deflectors (72).

12. A residue spreader according to claim 11, wherein the respective pivotal mountings (94) of each of the inlet deflectors (92) are aligned with pivotal mountings (74) of the outlet deflectors (72) in a fore and aft direction between the inlet side (304) and the outlet side (306).

13. A residue spreader according to any preceding claim, further comprising a pair of impellors (220) journaled to the body (70) on respective upright rotation axes and positioned outboard of the deflectors (72).

14. A residue spreading system comprising a residue spreader according to any preceding claim, and a controller (501) configured to control the distribution actuator (82) and the adjustment actuators (90L,90R) in dependence upon a sensed feeding state.

15. A combine harvester (10) comprising a straw chopper (35) and a residue spreader (36) according to any preceding claim, the residue spreader (36) being mounted immediately downstream of the straw chopper (35).
